# EUROPÄISCHE PATENTSCHRIFT

(11) **EP 2 545 603 B1**
(45) Veröffentlichungstag und Bekanntmachung des Hinweises auf die Patenterteilung: **08.07.2015**
(21) Anmeldenummer: 11706171.3
(22) Anmeldetag: 18.02.2011
(51) Int. Cl.: H01M 2/10, H01M 2/12, H01M 2/36, B60K 1/04, B60R 16/033

(54) **SPEICHERMODUL ZUR SPANNUNGSVERSORGUNG, INSBESONDERE EINES KRAFTFAHRZEUGS**
STORAGE MODULE FOR VOLTAGE SUPPLY, IN PARTICULAR FOR A MOTOR VEHICLE
MODULE D'ACCUMULATION POUR L'ALIMENTATION ÉLECTRIQUE, NOTAMMENT D'UN VÉHICULE AUTOMOBILE

(30) Priorität: 10.03.2010 DE 102010010844
(43) Veröffentlichungstag der Anmeldung: 16.01.2013
(73) Patentinhaber: Bayerische Motoren Werke Aktiengesellschaft, 80809 München (DE)
(72) Erfinder: GOESMANN, Hubertus, 89564 Nattheim-Auernheim (DE); PETZ, Philipp, 81379 München (DE)
(86) Internationale Anmeldenummer: PCT/EP2011/000796
(87) Internationale Veröffentlichungsnummer: WO 2011/110282

(56) Entgegenhaltungen:
- DE-A1- 10 157 272
- DE-A1-102008 025 422
- US-A1- 2007 184 337
- US-A1- 2008 318 117

## Beschreibung

Die Erfindung betrifft ein Speichermodul zur Spannungsversorgung, insbesondere eines Kraftfahrzeugs mit einer Anzahl an Speicherzellen, die jeweils ein erstes und ein zweites Anschlussterminal unterschiedlicher Polarität und ein deckelseitig angeordnetes Ventil aufweisen. Über die Anschlussterminals sind die Speicherzellen elektrisch zu dem Speichermodul verschaltet. Über das jeweilige Ventil kann ein in einer Speicherzelle vorhandener Innendruck abgebaut werden und Elektrolyt aus der Speicherzelle austreten. Ferner weist das Speichermodul eine saugfähige Schicht zur Aufnahme und Bindung auslaufenden Elektrolyts auf, die benachbart zu dem und/oder im Bereich des Ventils einer jeweiligen Speicherzelle angeordnet ist.

Die Speicherzellen eines Speichermoduls der oben beschriebenen Art weisen üblicherweise ein Ventil in Gestalt einer Sollbruchstelle auf. Diese durch Überdruck im Inneren der Speicherzelle einmalig betätigbare, nicht verschließbare Sollbruchstelle ermöglicht den Austritt von überflüssigem Elektrolyt bei Alterung der Speicherzelle aus dem Inneren der Speicherzelle. Da der in Speicherzellen verwendete Elektrolyt üblicherweise elektrisch leitend ist, kann dies unter ungünstigen Umständen zu Kurzschlüssen innerhalb des Speichermoduls führen. Hierdurch kann unter Umständen die Funktion des gesamten Speichermoduls nicht mehr gewährleistet werden. Um dies zu verhindern ist die saugfähige Schicht vorgesehen. Aufgrund dieser Schicht kann sich eventuell aus einer Speicherzelle austretender Elektrolyt nicht unkontrolliert innerhalb des Speichermoduls verbreiten. Statt dessen wird der auslaufende Elektrolyt durch die saugfähige Schicht aufgenommen und gespeichert.

Entsprechend ausgestattete Speichermodule sind aus dem Stand der Technik bereits bekannt. So zeigt die US 2008/0318117 A1 eine Batterieanordnung mit einer Batterie, die eine Anschlussklemme und ein Auslassventil aufweist. Im Bereich der Anschlussklemme und des Auslassventils weist die Batterie ein Abdeckelement und eine Elektrolytsteuerelement auf. Das Elektrolytsteuerelement weist mehrere Schichten auf. Eine erste Schicht ist dem Auslassventil zugewandt und besteht aus einem für den Elektrolyt durchlässigen Material. Diese erste Schicht dient einer Verlangsamung des über das Ventil ausströmenden Elektrolyts. Eine sich an die erste Schicht anschließende zweite Schicht besteht aus einem Elektrolyt absorbierendem Material, die dazu dient, denjenigen Elektrolyt zu absorbieren, der durch die erste Schicht hindurchtritt. In der DE 10 2008 025 422 A1 ist ein Energiespeicher beschrieben, der aus nebeneinander angeordneten Rundzellen besteht: Die Rundzellen sind an ihrer Oberseite mittig mit einer Sicherheits-Berstmembran ausgestattet, die sich im Falle eines Überdrucks im Zellinneren öffnet. Um zu verhindern, dass sich eventuell austretender Elektrolyt weiter ausbreiten kann, ist direkt oberhalb der Sicherheits-Berstmembran eine saugfähige Masse, vorzugsweise in Form von getrockneten Tabletten als Absorber positioniert. Die US 2007/0184337 A1 zeigt eine in einem Gehäuse angeordnete Batterieanordnung. Im unteren Gehäuseteil ist ein Kühlmittelabflussraum ausgebildet, auf dessen Boden sich ein flüssiges Absorptionsmaterial befindet, das bei Absorbieren eines über ein Gasventil austretenden Elektrolyts gerinnt oder geliert.

Die vorstehend beschriebenen Maßnahmen ermöglichen zwar die Absorption von über ein Auslassventil austretendem Elektrolyt, sie sind jedoch noch nicht optimal.

Es ist daher Aufgabe der vorliegenden Erfindung, ein Speichermodul der oben bezeichneten Art weiterzubilden, welches auf nach wie vor einfache und kostengünstige Weise eine gegenüber bekannten Speichermodulen deutlich erhöhte Betriebssicherheit aufweist.

Diese Aufgabe wird gelöst durch ein Speichermodul gemäß den Merkmalen des Patentanspruches 1. Vorteilhafte Ausgestaltungen ergeben sich aus den abhängigen Patentansprüchen.

Die Erfindung schafft ein Speichermodul zur Spannungsversorgung, insbesondere eines Kraftfahrzeugs, mit einer Anzahl an Speicherzellen, die jeweils ein erstes und ein zweites Anschlussterminal unterschiedlicher Polarität und ein deckelseitig angeordnetes Ventil aufweisen. Über die Anschlussterminals sind die Speicherzellen elektrisch zu dem Speichermodul verschaltet. Über das Ventil kann ein in einer Speicherzelle vorhandener Überdruck abgebaut werden und Elektrolyt der Speicherzelle aus dieser austreten. Zur Aufnahme und Bindung auslaufenden Elektrolyts ist eine saugfähige Schicht benachbart zu dem und/oder im Bereich des Ventils einer jeweiligen Speicherzelle angeordnet. Erfindungsgemäß liegt die saugfähige Schicht unmittelbar an jeweiligen Deckeln der Speicherzellen an und weist im Bereich des jeweiligen Ventils eine geringere Dicke als in den übrigen Bereichen auf.

Wenn in der vorliegenden Beschreibung nachfolgend von einer Speicherzelle die Rede ist, sollen hierunter auch Doppelschichtkondensatoren verstanden werden.

Eventuell aus einer Speicherzelle austretender Elektrolyt kann sich dadurch, dass die saugfähige Schicht unmittelbar an den Deckeln der Speicherzellen anliegt noch weniger unkontrolliert innerhalb des Speichermoduls verbreiten. Dadurch dass die saugfähige Schicht im Bereich des jeweiligen Ventils eine geringere Dicke als in den übrigen Bereichen aufweist, ist das Austreten von Gas aus dem Inneren der Speicherzelle beim Öffnen des Ventils erleichtert. Insgesamt stellt die saugfähige Schicht in einem deutlich verbesserten Maße sicher, dass zwischen den Anschlussterminals benachbarter Speicherzellen keinerlei Kurzschlüsse auftreten können. Hierdurch ist die Gefahr der Schädigung des Speichermoduls weiter minimiert. Das Speichermodul wird durch die saugfähige Schicht vor chemischen Reaktionen, wie z.B. Zersetzungen von Isolationswerkstoffen, in dem Speichermodul bis zu einem Brand hin noch besser geschützt. Auch bei einem nicht detektierbaren oder detektierten Elektrolytaustritt aus einer oder mehreren Speicherzellen kann hierdurch die Funktionssicherheit des Speichermoduls in einem deutlich besseren Maß aufrecht erhalten werden.

Zweckmäßigerweise weisen die Speicherzellen die Gestalt eines Zylinders mit beliebigem Querschnitt (z.B. rund, elliptisch, prismatisch, usw.) auf, wobei das Ventil in einem den Zylindermantel verschließenden Deckel der Speicherzelle angeordnet ist. Dadurch, dass die Ventile der Speicherzellen deckelseitig angeordnet sind, kann bei einer Mehrzahl an übereinander angeordneten Speicherzellen die saugfähige Schicht auf besonders einfache Weise für eine Mehrzahl von Speicherzellen in dem Speichermodul vorgesehen werden. Inbesondere kann hierdurch eine leichte Zugänglichkeit der saugfähigen Schicht bei einem eventuellen Austausch gewährleistet werden.

Gemäß einer alternativen Ausgestaltungsvariante kann die saugfähige Schicht im Bereich des Ventils einer jeweiligen Speicherzelle eine Aussparung aufweisen. Hierdurch ist sichergestellt, dass bei der Öffnung des Ventils aus dem Inneren der Speicherzelle austretendes Gas ungehindert aus dieser entweichen kann. Bei dieser Ausgestaltung wird durch die relative Anordnung von Ventil und saugfähiger Schicht zueinander sichergestellt, dass aus dem Ventil austretender Elektrolyt zwangsläufig in Richtung der saugfähigen Schicht verläuft und durch diese gebunden werden kann. Idealerweise ist die Aussparung deshalb nicht wesentlich größer als das Ventil.

Gemäß einer alternativen Ausgestaltung ist die saugfähige Schicht überlappend zu dem Ventil einer jeweiligen Speicherzelle angeordnet. In dieser Ausgestaltungsvariante wird durch das Material und die Ausgestaltung der saugfähigen Schicht sichergestellt, dass aus dem Inneren der Speicherzelle austretendes Gas trotz der zu dem Ventil überlappenden saugfähigen Schicht entweichen kann. Bei dieser Variante ist ein maximaler Schutz gegeben, da auslaufender Elektrolyt unmittelbar nach dem aus dem Ventil in der saugfähigen Schicht gebunden wird.

Gemäß einer zweckmäßigen Ausgestaltung umfasst die saugfähige Schicht ein Vlies oder ein Granulat. In der Variante, dass die saugfähige Schicht ein Vlies umfasst, kann diese ein- oder mehrlagig ausgebildet sein. Es ist zweckmäßig, wenn die saugfähige Schicht eine doppellagige Strukturfolie umfasst, in die das saugfähige Granulat oder das Vlies eingebettet ist. Hierdurch kann aus dem Ventil austretender Elektrolyt direkt gebunden werden, ohne weitere Schäden (chemische Reaktionen oder Kurzschluss) zu verursachen. Durch die doppelseitige Strukturfolie, welche die Außenseiten der saugfähigen Schicht ausbildet, ist sichergestellt, dass wässriges Kondensat die saugfähige Schicht nicht bis zu einem Schadensfall der oben bezeichneten Art tränkt. Ferner wird durch die Strukturfolie ein "Auslaufen" aus dem saugfähigen Material verhindert. Ist die saugfähige Schicht überlappend zu dem Ventil einer jeweiligen Speicherzelle angeordnet, so wird mit dem Öffnen des Ventils die dem Ventil zugewandte Seite der Strukturfolie zerstört, so dass austretender Elektrolyt durch das Vlies oder das Granulat aufgenommen wird.

In diesem Zusammenhang kann weiterhin vorgesehen sein, dass die saugfähige Schicht eine Mehrzahl an voneinander abgegrenzten Taschen oder Polstern aufweist. Hierbei kann für jede Speicherzelle eine vorgegebene Anzahl an Taschen oder Polstern vorgesehen sein, wobei deren Größe bzw. Volumen an den typischerweise aus einer Speicherzelle austretenden Elektrolyt angepasst ist.

Die Dicke der saugfähigen Schicht entspricht zweckmäßigerweise der Höhe des ersten Anschlussterminals. Das erste Anschlussterminal ist, wie bei Speicherzellen mit rundem Querschnitt bekannt, durch einen knopfartigen Vorsprung gebildet, während das zweite Anschlussterminal mehr oder minder flächig in der gegenüberliegenden Stirnseite der Speicherzelle ausgebildet ist. Dadurch, dass die Dicke der saugfähigen Schicht höchstens die Höhe des ersten Anschlussterminals aufweist, kann die saugfähige Schicht ohne zusätzlichen Platzbedarf in ein existierendes Speichermodul eingebracht werden. Bedingt durch die konstruktiven Merkmale von Speichermodulen hat es sich als zweckmäßig herausgestellt, wenn die Dicke der saugfähigen Schicht zwischen 2 mm und 4 mm beträgt.

Es ist weiterhin zweckmäßig, wenn die saugfähige Schicht zumindest in Schwerkraftrichtung unterhalb des Ventils angeordnet ist, wenn das Speichermodul sich in seiner Einbaustelle in dem Kraftfahrzeug befindet. Hierdurch wird unter Nutzung der Schwerkraft sichergestellt, dass der aus einer Speicherzelle austretende Elektrolyt in die saugfähige Schicht zur Aufnahme und Bindung läuft.

Als Materialien für die saugfähige Schicht kommen prinzipiell alle geeigneten Materialien in Frage, welche in der Lage sind, Elektrolyt aufzunehmen und zu binden. Insbesondere sind dies die in einem Speichermodul zur Aufnahme von Elektrolyt vorgesehenen Folien aus beständigem Polypropylen.

Zur Minimierung des Platzbedarfs des Speichermoduls ist die saugfähige Schicht zwischen den Anschlussterminals der Speicherzellen und Zellverbinder des Speichermoduls vorgesehen, wobei ein jeweiliger Zellverbinder ein jeweiliges Anschlussterminal einer Speicherzelle und ein zweites Anschlussterminal einer anderen, benachbarten Speicherzelle elektrisch miteinander verbindet.

Die Erfindung wird nachfolgend näher anhand von Ausführungsbeispielen beschrieben. Es zeigen:
- Fig. 1: eine schematische Darstellung eines erfindungsgemäßen Speichermoduls in einer Frontansicht,
- Fig. 2: einen vergrößerten Ausschnitt eines Teilbereichs der Ansicht in Fig. 1,
- Fig. 3: eine erste Ausgestaltungsvariante der an einer Speicherzelle angeordneten saugfähigen Schicht in einer vergrößerten Detailansicht,
- Fig. 4: eine zweite Ausgestaltungsvariante der an einer Speicherzelle angeordneten saugfähigen Schicht in einer vergrößerten Detailansicht, und
- Fig. 5: eine dritte Ausgestaltungsvariante der an einer Speicherzelle angeordneten saugfähigen Schicht in einer vergrößerten Detailansicht.

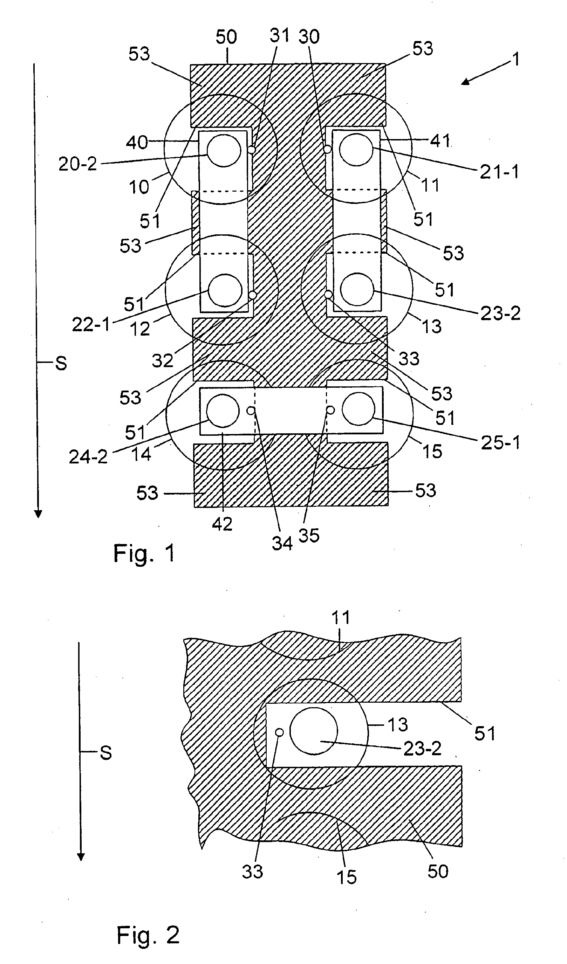

Fig. 1 zeigt beispielhaft eine schematische Darstellung des erfindungsgemäßen Speichermoduls 1 in einer frontalen Ansicht. Das dargestellte Speichermodul 1 weist beispielhaft sechs Speicherzellen 10, 11, 12, 13, 14, 15 auf, die in zwei Reihen übereinander angeordnet sind. Die Anordnung des Speichermoduls 1, z.B. in einem Kraftfahrzeug, kann aus der mit "S" gekennzeichneten Schwerkraftrichtung ersehen werden. In der Praxis kann das Speichermodul eine von der gezeigten Anzahl an Speicherzellen unterschiedliche Anzahl an Speicherzellen aufweisen. Wenn in den nachfolgenden Ausführungsbeispielen von einer Speicherzelle die Rede ist, so sind hierunter auch Doppelschichtkondensatoren zu verstehen.

Die Speicherzellen 10, ..., 15 weisen - wiederum lediglich beispielhaft - einen kreisförmigen Querschnitt auf, wobei jedoch auch prinzipiell andere Querschnittsformen möglich sind. Jede der Speicherzellen 10, ..., 15 umfasst ein erstes und ein zweites Anschlussterminal unterschiedlicher Polarität. Auf der in Fig. 1 sichtbaren Frontseite weisen unmittelbar zueinander benachbarte Speicherzellen Anschlussterminals unterschiedlicher Polarität auf. Die Speicherzelle 10 weist z.B. auf der sichtbaren Frontseite ein zweites Anschlussterminal 20-2 auf. Die ihr unmittelbar benachbarten Speicherzellen 41, 42 weisen auf der sichtbaren Frontseite ein erstes, knopfartiges Anschlussterminal 21-1 bzw. 22-1 auf. In entsprechender Weise ist ein zweites Anschlussterminal 23-2 der Speicherzelle 13, ein zweites Anschlussterminal 24-2 der Speicherzelle 14 und ein erstes Anschlussterminal 25-1 der Speicherzelle 15 dem Betrachter zugewandt.

Die elektrische Verschaltung der Speicherzellen 10, ..., 15 erfolgt über metallische Zellverbinder 40, 41 und 42. Dabei verbindet der beispielhaft rechteckige Zellverbinder 40 das zweite Anschlussterminal 20-2 der Speicherzelle 10 mit dem ersten Anschlussterminal 22-1 der Speicherzelle 12. Auf der rückwärtigen Seite der Speicherzellen sind die Anschlussterminals der Speicherzellen 12 und 14 über einen in der Figur nicht dargestellten Zellverbinder elektrisch verbunden. Über den Zellverbinder 42 ist das sichtbare zweite Anschlussterminal 24-2 der Speicherzelle 14 mit dem ersten Anschlussterminal 25-1 der Speicherzelle 15 verbunden. Auf der nicht sichtbaren Rückseite des Speichermoduls 1 ist das zweite Anschlussterminal der Speicherzelle 15 mit dem ersten Anschlussterminal der Speicherzelle 13 über einen Zellverbinder verbunden. Auf der in der Figur sichtbaren Frontseite des Speichermoduls 1 ist das zweite Anschlussterminal 23-2 der Speicherzelle 13 mit dem ersten Anschlussterminal 21-1 der Speicherzelle 11 verbunden. Spannungsabgriffe des Speichermodüls 1 sind beispielsweise auf der nicht dargestellten Rückseite der Speicherzellen 10 und 11 ausgebildet. In der beschriebenen Weise sind die Speicherzellen 10, ..., 15 des Speichermoduls 1 seriell miteinander verbunden, wobei in der Praxis auch davon abweichende Verschaltungen auftreten können.

Die Speicherzellen 10, ..., 15 weisen die Gestalt eines Zylinders auf. Dabei ist in einem den Zylindermantel verschließenden Deckel der Speicherzelle jeweils ein Ventil 30, 31, 32, 33, 34, 35 angeordnet. Im vorliegenden Ausführungsbeispiel sind die Ventile 30, ..., 35 auf der dem Betrachter zugewandten Frontseite ausgebildet. Ein jeweiliges Ventil 30, ..., 35 ist benachbart zu dem jeweiligen Anschlussterminal vorgesehen. In dem in Fig. 1 gezeigten Ausführungsbeispiel befindet sich ein jeweiliges Ventil einer Speicherzelle in 3-Uhr- oder 9-Uhr-Position relativ zum Anschlussterminal der Speicherzelle. Die Ventile können als Sollbruchstelle ausgebildet werden, wodurch diese auf einfache Weise bereitstellbar sind.

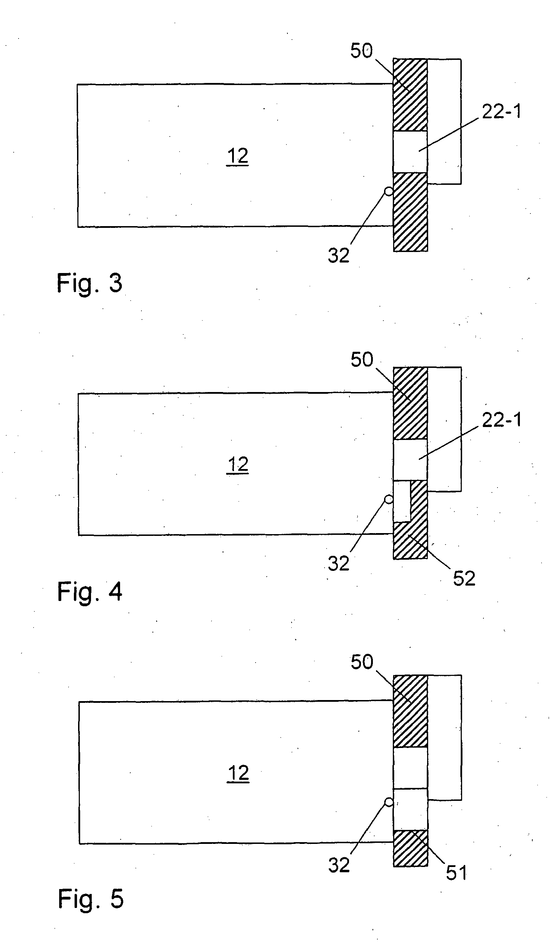

Die Ventile dienen dazu, einen in der Speicherzelle vorhandenen Innendruck abzubauen. Da die Ventile als Einmalventil in Gestalt einer Sollbruchstelle ausgebildet sind, kann nach dem Öffnen des Ventils Elektrolyt der Speicherzelle aus dieser austreten. Um zu verhindern, dass aus einer der Speicherzellen 10, ..., 15 auslaufender Elektrolyt eine Schädigung des Speichermoduls 1 oder einzelner Komponenten des Speichermoduls 1 verursacht, ist eine saugfähige Schicht 50 zur Aufnahme und Bindung des auslaufenden Elektrolyts benachbart und/oder im Bereich zu den Ventilen 30, ..., 35 einer jeweiligen Speicherzelle 10, ..., 15 angeordnet. Die saugfähige Schicht 50 liegt dabei unmittelbar an den jeweiligen Deckeln der Speicherzellen 10, ..., 15 an, in denen die Ventile ausgebildet sind. Die exemplarisch in Fig. 1 dargestellte saugfähige Schicht ist einteilig ausgebildet und sämtlichen der Speicherzellen des Speichermoduls 1 zugeordnet. Im Bereich der Anschlussterminals weist die saugfähige Schicht aufgrund der elektrischen Verbindung mit den Zellverbindern 40, 41, 42 jeweilige Aussparungen 51 auf. Betrachtet man die in der Fig. 1 dargestellte Anordnung im Querschnitt, so kommt die saugfähige Schicht 50 zwischen den Stirnseiten (Deckeln) der Speicherzellen 10, ..., 15 und den Zellverbindern 40, 41, 42 zum Liegen, wie dies in den Figuren 3 bis 5 exemplarisch dargestellt ist.

Die saugfähige Schicht 50 umfasst zur Aufnahme und Bindung des aus einer oder mehrerer der Speicherzellen 10, ..., 15 auslaufenden Elektrolyts ein saugfähiges Vlies oder ein saugfähiges Granulat. Das Vlies kann ein- oder mehrlagig ausgebildet sein. Das saugfähige Vlies oder das Granulat sind vorzugsweise innerhalb einer doppellagigen Strukturfolie der Schicht 50 angeordnet, welche die saugfähigen Materialien einbettet. Hierdurch kann sichergestellt werden, dass wässriges Kondensat das Vlies nicht bis zu einem Schadensfall tränken kann. Die saugfähige Schicht kann eine Mehrzahl an voneinander abgegrenzten Taschen oder Polstern aufweisen, so dass diese nach Art einer Steppdecke ausgebildet ist. Dabei ist mindestens eine Tasche oder mindestens ein Polster einem Ventil einer Speicherzelle zugeordnet, um das aus dieser Speicherzelle auslaufende Elektrolyt aufzunehmen und zu binden.

Für die Speicherzellen 10, ..., 15 des Speichermoduls 1 ist eine gemeinsame saugfähige Schicht 50 vorgesehen. Die Schicht 50 weist mit Zinnen 53 versehene Vorsprünge auf, die sich jeweils im Bereich zwischen zwei (in Schwerkraftrichtung) übereinander angeordneter Speicherzellen (d.h. deren Anschlussterminals) erstrecken. Hierdurch kann die Schicht 50 auch nach der Herstellung der elektrischen Verbindungen zwischen den Anschlussterminals und den Zellverbindern in den verbleibenden Zwischenraum geschoben werden. Prinzipiell können die Aussparungen auch kreisförmig oder polygonförmig sein, wobei dann die Herstellung der elektrischen Verbindung von Anschlussterminals und Zellverbindern erst nach der Positionierung der Schicht 50 an dem Speichermodul 1 erfolgen kann.

Fig. 2 zeigt einen vergrößerten Ausschnitt eines Teilbereichs der Ansicht in Fig. 1. Neben dem teilweisen Ausschnitt aus dem Speichermodul 1 ist mit dem Bezugszeichen S wieder die Schwerkraftrichtung eingezeichnet, woraus wieder die Montageposition des Speichermoduls 1 und die relative Position des Ventils hervorgeht. In dieser Darstellung ist ersichtlich, dass die saugfähige Folie 50 benachbart, d.h. nicht überlappend zu dem Ventil 33, in Schwerkraftrichtung unterhalb des Ventils 32 angeordnet ist. Beim Auslaufen von Elektrolyt aus dem Ventil 33 trifft der Elektrolyt unmittelbar auf die saugfähige Schicht 50, so dass er durch diese aufgenommen werden kann.

Die saugfähige Schicht 50 kann z.B. überlappend zu dem Ventil 30, ..., 35 einer jeweiligen Speicherzelle 10, ..., 15 angeordnet sein, wie dies für die Speicherzelle 12 schematisch in den Figuren 3 und 4 dargestellt ist. Bei einem Elektrolytaustritt aus dem Ventil 32 wird bei der in Fig. 3 gezeigten Variante die dem Zelldeckel, d.h. die an die saugfähige Schicht 50 angrenzende Seite der Speicherzelle 12, zugewandte Strukturfolie der saugfähigen Schicht 50 zerstört, wodurch Elektrolyt durch das im Inneren der doppellagigen Strukturfolie vorgesehene saugfähige Material aufgenommen und gebunden werden kann.

Erfindungsgemäß weist die saugfähige Schicht 50 im Bereich des Ventils 32 eine geringere Dicke als in den übrigen Bereichen auf. Dies ist schematisch in Fig. 4 dargestellt, wobei mit dem Bezugszeichen 52 der in der Dicke reduzierte Bereich der saugfähigen Schicht 50 gekennzeichnet ist.

Die saugfähige Schicht 50 kann im Bereich des Ventils einer jeweiligen Speicherzelle 10, ..., 15 eine alternativ (beliebig geformte) Aussparung 51 aufweisen, wie dies in der Querschnittsdarstellung der Fig. 5 illustriert ist.

Aus den Querschnittsdarstellungen bzw. Seitenansichten der Figuren 3 bis 5 geht hervor, dass die Dicke der saugfähigen Schicht höchstens der Höhe des ersten, knopfförmigen Anschlussterminals 22-1 der Speicherzelle 12 bzw. den ersten Anschlussterminals 22-1 bzw. 21-1 und 25-1 der Speicherzellen 12 und 15 in Fig. 1 entspricht. Die ersten Anschlussterminals sind ähnlich denen von herkömmlichen Rundzellen (Batterien oder Akkumulatoren) ausgestaltet. Es hat sich weiterhin herausgestellt, dass eine Dicke der saugfähigen Schicht von höchstens 2 mm ausreichend ist, um aus einer jeweiligen Speicherzelle auslaufenden Elektrolyt sicher aufnehmen und binden zu können.

In einer nicht dargestellten Ausführungsvariante können die Speicherzellen eines Speichermoduls auch stehend angeordnet sein. Das Ventil einer Speicherzelle ist vorzugsweise an dem in Schwerkraftrichtung unten liegenden-Deckel vorgesehen. Die saugfähige Schicht ist in Schwerkraftrichtung unterhalb des Ventils angeordnet.

### Bezugszeichenliste

- 1: Speichermodul
- 10: Speicherzelle
- 11: Speicherzelle
- 12: Speicherzelle
- 13: Speicherzelle
- 14: Speicherzelle
- 15: Speicherzelle
- 20-2: zweites Anschlussterminal
- 21-1: erstes Anschlussterminal
- 22-1: erstes Anschlussterminal
- 23-2: zweites Anschlussterminal
- 24-2: zweites Anschlussterminal
- 25-1: erstes Anschlussterminal
- 30: Ventil
- 31: Ventil
- 32: Ventil
- 33: Ventil
- 34: Ventil
- 35: Ventil
- 40: Zellverbinder
- 41: Zellverbinder
- 42: Zellverbinder
- 50: saugfähige Schicht
- 51: Aussparung
- 52: Bereich reduzierter Dicke der Schicht 50
- 53: Zinnen

## Patentansprüche

1. Speichermodul (1) zur Spannungsversorgung, insbesondere eines Kraftfahrzeugs, mit einer Anzahl an Speicherzellen (10, 11, ..., 15), die jeweils ein erstes und ein zweites Anschlussterminal unterschiedlicher Polarität, über die die Speicherzellen elektrisch zu dem Speichermodul (1) verschaltet sind, und ein deckelseitig angeordnetes Ventil (30, 31, ..., 35) aufweisen, über das ein in einer Speicherzelle (10, 11, ..., 15) vorhandener Innendruck abgebaut werden und Elektrolyt der Speicherzelle (10, 11, ..., 15) aus dieser austreten kann, wobei eine saugfähige Schicht (50) zur Aufnahme und Bindung auslaufenden Elektrolyts benachbart zu dem und/oder im Bereich des Ventils (30, 31, ..., 35) einer jeweiligen Speicherzelle (10, 11, ... , 15) angeordnet ist,
**dadurch gekennzeichnet, dass**
die saugfähige Schicht (50) unmittelbar an jeweiligen Deckeln der Speicherzellen (10, 11, ..., 15) anliegt und im Bereich des jeweiligen Ventils (30, 31, ..., 35) eine geringere Dicke als in den übrigen Bereichen aufweist.

2. Speichermodul nach Anspruch 1, **dadurch gekennzeichnet, dass** die Speicherzellen (10, 11, ..., 15) die Gestalt eines Zylinders mit beliebigem Querschnitt aufweisen und das Ventil (30, 31, ..., 35) in einem den Zylindermantel verschließenden Deckel der Speicherzelle (10, 11, ..., 15) angeordnet ist.

3. Speichermodul nach Anspruch 1 oder 2, **dadurch gekennzeichnet, dass** die saugfähige Schicht (50) überlappend zu dem Ventil (30, 31, ..., 35) einer jeweiligen Speicherzelle (10, 11, ..., 15) angeordnet ist.

4. Speichermodul nach einem der vorhergehenden Ansprüche, **dadurch gekennzeichnet, dass** die saugfähige Schicht (50) ein Vlies oder ein Granulat umfasst.

5. Speichermodul nach Anspruch 4, **dadurch gekennzeichnet, dass** das Vlies ein oder mehrlagig ist.

6. Speichermodul nach einem der vorhergehenden Ansprüche, **dadurch gekennzeichnet, dass** die saugfähige Schicht (50) eine doppellagige Strukturfolie umfasst, in die das saugfähige Granulat oder das Vlies eingebettet ist.

7. Speichermodul nach Anspruch 6, **dadurch gekennzeichnet, dass** die saugfähige Schicht (50) eine Mehrzahl an voneinander abgegrenzten Taschen oder Polstern aufweist.

8. Speichermodul nach einem der vorhergehenden Ansprüche, **dadurch gekennzeichnet, dass** die Dicke der saugfähigen Schicht (50) höchstens die Höhe des ersten Anschlussterminals (21-1, 22-1, 25-1) aufweist.

9. Speichermodul nach einem der vorhergehenden Ansprüche, **dadurch gekennzeichnet, dass** die Dicke der saugfähigen Schicht (50) zwischen 2 mm und 4 mm beträgt.

10. Speichermodul nach einem der vorhergehenden Ansprüche, **dadurch gekennzeichnet, dass** die saugfähige Schicht (50) zumindest in Schwerkraftrichtung (5) unterhalb des Ventils angeordnet ist, wenn das Speichermodul (1) sich in seiner Einbaustellung in dem Kraftfahrzeug befindet.

11. Speichermodul nach einem der vorhergehenden Ansprüche, **dadurch gekennzeichnet, dass** die saugfähige Schicht (50) beständiges Polypropylen umfasst.

12. Speichermodul nach einem der vorhergehenden Ansprüche, **dadurch gekennzeichnet, dass** die saugfähige Schicht (50) zwischen den Anschlussterminals (40, 41, 42) der Speicherzellen (10, 11, ..., 15) und Zellverbinder (40, 41, 42) des Spei chermoduls (1) vorgesehen ist, wobei ein jeweiliger Zellverbinder (40, 41, 42) ein erstes Anschlussterminal (21-1, 22-1, 25-1) einer Speicherzelle und ein zweites Anschlussterminal (20-2, 23-2, 24-2) einer anderen benachbarten Speicherzelle elektrisch miteinander verbindet.

## Claims

1. A storage module (1) for voltage supply, especially for a motor vehicle, with a number of storage cells (10, 11, ..., 15), each having a first and a second connection terminal of different polarity, by means of which the storage cells are electrically connected to the storage module (1), and a valve (30, 31, ..., 35) arranged on the cover side, by means of which an internal pressure present in a storage cell (10, 11, ..., 15) can be reduced and electrolyte of the storage cell (10, 11, ..., 15) can escape therefrom, wherein an absorbent layer (50) is arranged adjacent to the and/or in the region of the valve (30, 31, ..., 35) of a respective storage cell (10, 11, ..., 15) to absorb and bind leaking electrolyte, **characterised in that**
the absorbent layer (50) rests directly on respective covers of the storage cells (10, 11, ..., 15) and, in the region of the respective valve (30, 31, ..., 35), has a smaller thickness than in the remaining regions.

2. A storage module according to claim 1, **characterised in that** the storage cells (10, 11, ..., 15), have the form of a cylinder with any cross section and the valve (30, 31, ..., 35) is arranged in a cover of the storage cell (10, 11, ..., 15) closing the cylinder surface.

3. A storage module according to claim 1 or claim 2, **characterised in that** the absorbent layer (50) is arranged overlapping with respect to the valve (30, 31, ..., 35) of a respective storage cell (10, 11, ..., 15).

4. A storage module according to any one of the preceding claims, **characterised in that** the absorbent layer (50) comprises a nonwoven or a granulate.

5. Storage module according to claim 4, **characterised in that** the nonwoven is single-layered or multi-layered.

6. A storage module according to any one of the preceding claims, **characterised in that** the absorbent layer (50) comprises a double-layered structured film, in which the absorbent granulate or the nonwoven is embedded.

7. A storage module according to claim 6, **characterised in that** the absorbent layer (50) has a plurality of pockets or cushions delimited from one another.

8. A storage module according to any one of the preceding claims, **characterised in that** the thickness of the absorbent layer (50) has at least the height of the first connection terminal (21-1, 22-1, 25-1).

9. A storage module according to any one of the preceding claims, **characterised in that** the thickness of the absorbent layer (50) is between 2 mm and 4 mm.

10. A storage module according to any one of the preceding claims, **characterised in that** the absorbent layer (50), at least in the gravitational force direction (5), is arranged below the valve when the storage module (1) is in its installation position in the motor vehicle.

11. A storage module according to any one of the preceding claims, **characterised in that** the absorbent layer (50) comprises resistant polypropylene.

12. A storage module according to any one of the preceding claims, **characterised in that** the absorbent layer (50) is provided between the connection terminals (40, 41, 42) of the storage cells (10, 11, ..., 15) and cell connectors (40, 41, 42) of the storage module (1), a respective cell connector (40, 41, 42) electrically connecting a first connection terminal (21-1, 22-1, 25-1) of a storage cell and a second connection terminal (20-2, 23-2, 24-2) of another adjacent storage cell to one another.

## Revendications

1. Module d'accumulation (1) pour permettre l'alimentation en tension en particulier d'un véhicule, comportant plusieurs cellules d'accumulation (10, 11... 15) qui comportent chacune une première et une seconde bornes de connexion ayant des polarités différentes par l'intermédiaire desquelles les cellules d'accumulation sont branchées électriquement sur le module d'accumulation, ainsi qu'une soupape (30, 31...35) montée côté couvercle permettant de réduire la pression interne régnant dans une cellule d'accumulation (10, 11... 15), et d'extraire l'électrolyte des cellules d'accumulation (10, 11... 15), une couche absorbante (50) permettant de recueillir et de lier l'électronique extrait étant montée à proximité et/ou dans la zone de la soupape (30, 31...35) d'une cellule d'accumulation (10, 11... 15) respective,
**caractérisé en ce que**
la couche absorbante (50) est appliquée directement sur les couvercles respectifs des cellules d'accumulation (10, 11...15) et présente une épaisseur plus faible dans la zone de chaque soupape (30, 31...35) que dans les autres zones.

2. Module d'accumulation conforme à la revendication 1,
**caractérisé en ce que**
les cellules d'accumulation (10, 11...15) ont la configuration d'un cylindre ayant une section quelconque et la soupape (30, 31...35) est située dans un couvercle des cellules (10, 11...15) fermant l'enveloppe cylindrique.

3. Module d'accumulation conforme à la revendication 1 ou 2,
**caractérisé en ce que**
la couche absorbante (50) est positionnée de façon à chevaucher la soupape (30, 31...35) d'une cellule d'accumulation (10, 11...15) respective.

4. Module d'accumulation conforme à l'une des revendications précédentes,
**caractérisé en ce que**
la couche absorbante (50) comprend un voile et/ou un granulat.

5. Module d'accumulation conforme à la revendication 4,
**caractérisé en ce que**
le voile comprend une ou plusieurs couches.

6. Module d'accumulation conforme à l'une des revendications précédentes,
**caractérisé en ce que**
la couche absorbante (50) comprend un film structuré à double couche dans lequel est noyée le granulat ou le voile absorbant.

7. Module d'accumulation conforme à la revendication 6,
**caractérisé en ce que**
la couche absorbante (50) comprend plusieurs poches ou coussins voisins.

8. Module d'accumulation conforme à l'une des revendications précédentes,
**caractérisé en ce que**
l'épaisseur de la couche absorbante (50) a au maximum la hauteur de la première borne de connexion (21-1, 22-1, 25-1).

9. Module d'accumulation conforme à l'une des revendications précédentes,
**caractérisé en ce que**
l'épaisseur de la couche absorbante (50) est comprise entre 2 mm et 4 mm.

10. Module d'accumulation conforme à l'une des revendications précédentes,
**caractérisé en ce que**
la couche absorbante (50) est positionnée, au moins dans la direction de la force de gravité (5) au dessous de la soupape lorsque le module d'accumulation (1) est situé dans sa position de montage dans le véhicule.

11. Module d'accumulation conforme à l'une des revendications précédentes,
**caractérisé en ce que**
la couche absorbante (50) renferme du polypropylène stable.

12. Module d'accumulation conforme à l'une des revendications précédentes,
**caractérisé en ce que**
la couche absorbante (50) est située entre les bornes de connexion (40, 41, 42) des cellules d'accumulation (10, 11...15) et un élément de liaison des cellules (40, 41, 42) du module d'accumulation (1), un élément de liaison de cellules respectif (40, 41, 42) reliant électriquement une première borne de connexion (21-1, 22-1, 25-1) d'une cellule d'accumulation et une seconde borne de connexion (20-2, 23-2, 24-2) d'une autre cellule d'accumulation voisine.
